# EUROPEAN PATENT APPLICATION

(11) **EP 2 104 350 A1**
(43) Date of publication of application: **23.09.2009**
(21) Application number: 07846112.6
(22) Date of filing: 20.12.2007
(51) Int. Cl.: H04N 7/173

(54) **A METHOD, SYSTEM AND EQUIPMENT FOR IMPROVING THE RELIABILITY OF A VOD SERVICE**

(30) Priority: 20.12.2006 CN 200610157987
(71) Applicant: Huawei Technologies Co., Ltd., Longgang District Shenzhen Guangdong 518219 (CN)
(72) Inventor: XIONG, Anyuan, Shenzhen Guangdong 518129 (CN)
(74) Representative: Pfenning, Meinig & Partner GbR
(86) International application number: PCT/CN2007/071286
(87) International publication number: WO 2008/074264

(57) **Abstract**

A method for improving video on demand (VOD) service reliability includes: selecting a first VOD server to provide VOD services for a user terminal; and reselecting a second VOD server according to the current running status of each VOD server and a policy to continue providing VOD services for the user terminal after receiving a VOD request re-initiated by the user terminal. The present invention avoids blind switchover of VOD services, greatly improves the switchover success ratio, and ensures the quality of the VOD services provided for users.

## Description

This application claims priority to Chinese Patent Application No. 200610157987.3, filed with the Chinese Patent Office on December 20, 2006 and entitled "Method, System, and Device for Improving VOD Service Reliability", which is incorporated herein by reference in its entirety.

### Field of the Invention

The present invention relates to Internet Protocol Television (IPTV) technologies, and in particular, to a method, system, and device for improving the video on demand (VOD) service reliability.

### Background of the Invention

With the fast development of the broadband Internet and the rapid growth of the VOD, TV program, video phone, online game, and multimedia messaging service (MMS) provided for family users, the IPTV service gradually becomes one of the hotspots in the broadband multimedia field. The IPTV service is a carrier-class service and its advantages lie in interaction and timeliness. With the IPTV service, users can watch TV programs in real time according to requirements. This completely changes the original mode in which users passively watch TV programs and greatly enriches people's cultural life.

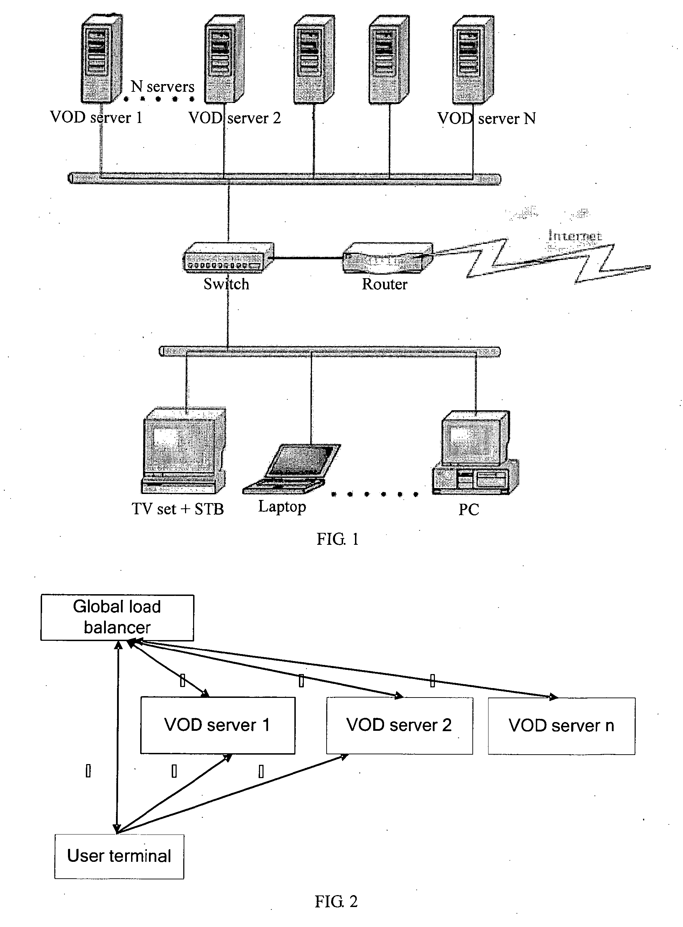

FIG. 1 shows the architecture of a conventional IPTV system. A VOD server provides video streaming services for user terminals. After receiving data, a user terminal can decompress the data and play videos instantly. Due to instable network transmission, however, when VOD server 1 provides video streaming services for the user terminal, the link between VOD server 1 and the user terminal may be broken due to the jitter or congestion of the transmission link. Thus, VOD server 1 cannot continue to serve the user terminal. In this case, the VOD service must be restarted manually, which is troublesome.

FIG. 2 shows a conventional solution. The solution includes the following steps:

Step 1: A user terminal initiates a VOD request to the global load balancer.

Step 2: The global load balancer selects more than two VOD servers such as VOD servers 1 and 2 according to the running status of each VOD server and a policy, and sends the IP addresses (IP1 and IP2) of the selected VOD servers to the user terminal.

Step 3: The user terminal accesses one of the VOD servers, such as VOD server 1.

Step 4: When detecting that the user terminal is disconnected from the VOD server providing VOD services, the user terminal initiates a VOD request carrying the position information of the previous VOD to VOD server 2 according to the list of VOD servers (IP1 and IP2). Then VOD server 2 continues providing VOD services.

The preceding technical solution solves the problem that the VOD service has to be restarted to a certain extent. According to the technical solution, however, the inventor discovers that VOD server switchover is of certain blindness and that the reliability is not high because the current status of standby VOD server 2 is not considered during VOD server switchover.

### Summary of the Invention

An objective of the present invention is to provide a method, system, and device for providing more reliable VOD services.

The objective of the present invention is achieved through the following technical solution:

A method for improving VOD service reliability includes:
selecting a first VOD server to provide VOD services for a user terminal; and
reselecting a second VOD server according to the current running status of each VOD server and a policy to continue providing VOD services for the user terminal after receiving a VOD request re-initiated by the user terminal.

A system for improving VOD service reliability includes a user terminal, at least two VOD servers, and a global balancer, where:
the user terminal is adapted to: initiate a VOD request to the global load balancer and receive VOD services provided by a first VOD server;
the VOD servers are adapted to provide VOD services for the user terminal;
the global load balancer is adapted to select the first VOD server to provide VOD services for the user terminal;
the user terminal is further adapted to re-initiate a VOD request to the global load balancer after detecting that the current first VOD server cannot continue providing VOD services; and
the global load balancer is further adapted to reselect a second VOD server according to the current running status of each VOD server and a policy to continue providing VOD services for the user terminal after receiving the VOD request re-initiated by the user terminal.

A global load balancer includes:
a selecting unit, adapted to: select a first VOD server to provide VOD services for a user terminal, receive a reselection message, and reselect a second VOD server according to the current running status of each VOD server and a policy to continue providing VOD services for the user terminal; and
a receiving unit, adapted to: receive a VOD request re-initiated by the user terminal and notify the selecting unit to reselect a VOD server.

As shown in the preceding technical solution, before switching the VOD server, the global load balancer provided in embodiments of the present invention makes a judgment according to the current running status of each VOD server and a policy and then reselects a VOD server to continue providing VOD services for user terminals. The technical solution avoids blind switchover, greatly improves the switchover success ratio, and ensures the quality of the VOD services provided for users.

### Brief Description of the Drawings

FIG. 1 shows the architecture of an IPTV system;

FIG. 2 shows a schematic diagram for implementing VOD services in the prior art;

FIG. 3 shows a schematic diagram for implementing VOD services according to an embodiment of the present invention; and

FIG. 4 shows a flowchart for implementing VOD services according to an embodiment of the present invention.

### Detailed Description of the Embodiments

The present invention is hereinafter described in detail with reference to preferred embodiments and accompanying drawings.

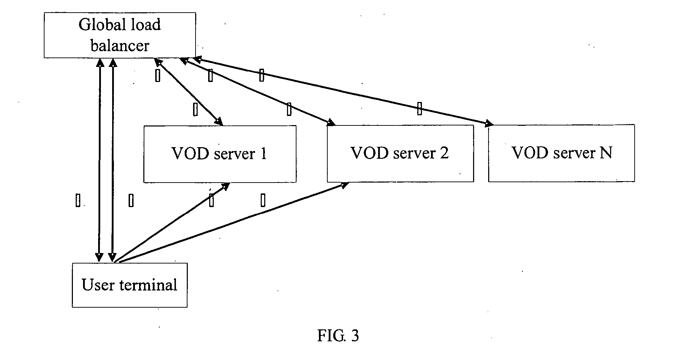

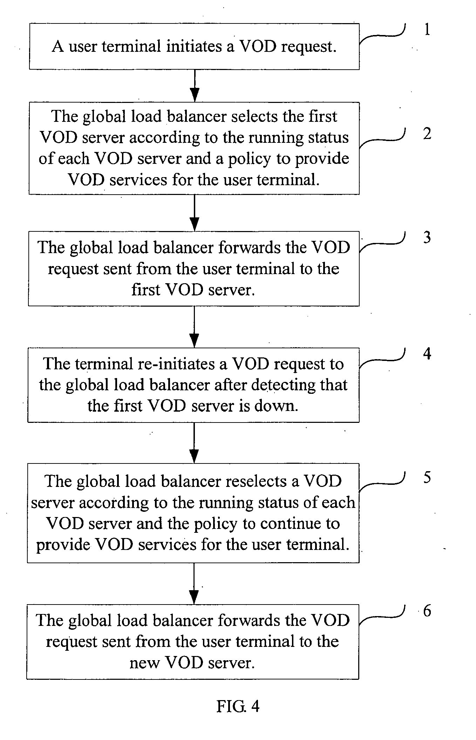

As shown in FIG 3 and FIG. 4, a system provided in an embodiment of the present invention includes a user terminal such as a set top box (STB) or a personal computer (PC), at least two VOD servers that are adapted to provide VOD services for user terminals, and a global load balancer. The process of implementing VOD services is as follows:

Step 1: A user terminal sends a VOD request to the global load balancer.

Step 2: The global load balancer selects an optimal VOD server according to the running status of each VOD and a policy, such as the first VOD server.

Step 3: The global load balancer forwards the VOD request sent from the user terminal to the first VOD server.

Step 4: After detecting that the first VOD server providing VOD services is down because the first VOD server is really down or the user terminal is disconnected from the first VOD server due to network faults or congestion, the user terminal re-initiates a VOD request to the global load balancer. The request may carry a midway calling flag and the IP address information of the first VOD server.

Step 5: According to the current running status of each VOD server and the policy, the global load balancer excludes the first VOD server that previously provides services and reselects another optimal VOD server, such as the second VOD server.

Step 6: The global load balancer forwards the VOD request sent from the user terminal to the second VOD server. According to the position information of the previous VOD in the VOD request, the second VOD server continues providing VOD services for the user terminal.

Detailed above are the principles and embodiments of the present invention. The embodiments are intended to help understand the methods and key ideas of the present invention only, and not intended to limit the present invention. It is apparent that those skilled in the art can make various modifications and variations to the present invention without departing from the spirit and scope of the present invention.

## Claims

1. A method for improving video on demand service reliability, comprising:
selecting a first VOD server to provide VOD services for a user terminal; and
selecting a second VOD server according to the current running status of each VOD server and a policy to continue providing VOD services for the user terminal after receiving a VOD request re-initiated by the user terminal.

2. The method of claim 1, wherein the process of selecting the first VOD server to provide VOD services for the user terminal comprises:
sending, by the user terminal, the VOD request to a global load balancer; and
selecting, by the global load balancer, the first VOD server according to the running status of each VOD server and the policy to continue providing VOD services for the user terminal.

3. The method of claim 1, wherein the VOD request re-initiated by the user terminal carries a midway calling flag.

4. The method of claim 1 or claim 3, wherein the VOD request re-initiated by the user terminal carries IP address information of the first VOD server.

5. The method of claim 1, wherein the process of selecting the second VOD server to continue providing VOD services for the user terminal comprises: by a global load balancer, excluding the first VOD server and reselecting the second optimal VOD server according to the current running status of each VOD server and the policy to continue providing VOD services for the user terminal.

6. The method of claim 5, further comprising: sending, by the user terminal, current play position information to the second VOD server; and continuing, by the second VOD server, providing VOD services from the current position.

7. A system for improving video on demand, VOD, service reliability, comprising a user terminal, at least two VOD servers, and a global balancer, wherein:
the user terminal is adapted to: initiate a VOD request to the global load balancer and receive VOD services provided by a first VOD server;
the VOD servers are adapted to provide VOD services for the user terminal;
the global load balancer is adapted to select the first VOD server to provide VOD services for the user terminal;
the user terminal is further adapted to re-initiate the VOD request to the global load balancer after detecting that the current first VOD server cannot continue providing VOD services, and
the global load balancer is further adapted to select a second VOD server according to the current running status of each VOD server and a policy to continue providing VOD services for the user terminal after receiving the VOD request re-initiated by the user terminal.

8. The system of claim 7, wherein the VOD request re-initiated by the user terminal carries a midway calling flag and IP address information of the first VOD server.

9. The system of claim 8, wherein:
the user terminal is also adapted to send current play position information to the second VOD server and the second VOD server continues providing VOD services for the user terminal from the current position.

10. A global load balancer, comprising:
a selecting unit, adapted to: select a first video on demand, VOD, server to provide VOD services for a user terminal, receive a reselection message, and reselect a second VOD server according to the current running status of each VOD server and a policy to continue providing VOD services for the user terminal; and
a receiving unit, adapted to: receive a VOD request re-initiated by the user terminal and notify the selecting unit to reselect a VOD server.
